(19) Europäisches Patentamt
European Patent Office
Office européen des brevets

(11) **EP 3 093 146 B1**

(12) **EUROPEAN PATENT SPECIFICATION**

(45) Date of publication and mention
of the grant of the patent:
**18.09.2019 Bulletin 2019/38**

(51) Int Cl.:
**B41J 3/407** *(2006.01)*　　　**G03G 15/22** *(2006.01)*

(21) Application number: **16000888.4**

(22) Date of filing: **20.04.2016**

(54) **IMAGE PROCESSING APPARATUS, IMAGE FORMING APPARATUS, IMAGE PROCESSING METHOD, AND PROGRAM**

BILDVERARBEITUNGSVORRICHTUNG, BILDERZEUGUNGSVORRICHTUNG, BILDVERARBEITUNGSVERFAHREN UND PROGRAMM

APPAREIL DE TRAITEMENT D'IMAGES, APPAREIL DE FORMATION D'IMAGES, PROCEDE DE TRAITEMENT D'IMAGES ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2015 JP 2015097363**

(43) Date of publication of application:
**16.11.2016 Bulletin 2016/46**

(73) Proprietor: **CANON KABUSHIKI KAISHA
Tokyo (JP)**

(72) Inventor: **Sano, Toshiyuki
Tokyo (JP)**

(74) Representative: **WESER & Kollegen
Patentanwälte PartmbB
Radeckestraße 43
81245 München (DE)**

(56) References cited:
**JP-A- 2004 299 058　　US-A1- 2006 256 341
US-A1- 2011 279 836**

**Description**

BACKGROUND OF THE INVENTION

Field of the Invention

The present invention relates to a technique to implement desired gloss in three-dimensional molding.

Description of the Related Art

In recent years, aiming at preservation of cultural properties, an attempt is made to duplicate cultural properties by using a 3D printer or a printer using a UV curable ink. For example, in duplicating an oil painting, it is desirable that the colors of paints, protrusions (hereinafter, surface roughness) indicating a roughness state of the surface of the oil painting, and the gloss of the surface of the oil painting be reproduced. As the reproduction technique, the method of obtaining a three-dimensional molded article by independently forming a surface roughness-layer, a color material layer, and a glossy layer by using a first print head for forming surface roughness, a second print head for forming an image, and a third print head for forming gloss has been proposed (Japanese Patent Laid-Open No. 2004-299058).

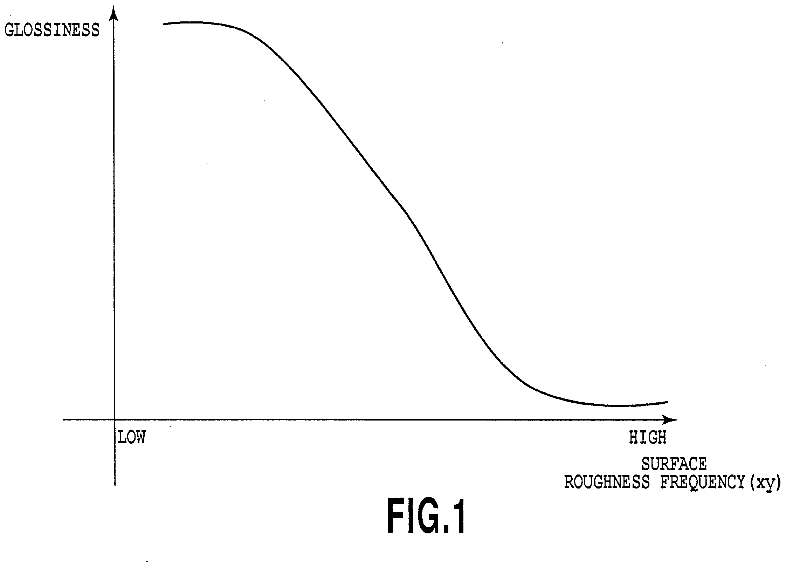

However, with the method described in Japanese Patent Laid-Open No. 2004-299058, there is a case where it is not possible to sufficiently reproduce desired glossiness. The cause of this is explained using FIG. 1. FIG. 1 is a graph representing a relationship between the surface roughness frequency and glossiness in the case where the surface of the same material is finished so as to have different roughness frequencies. As shown in FIG. 1, in the area in which the surface is finished so as to have surface roughness having a comparatively low frequency, the surface is close to a smooth surface, and therefore, the variation in the angle of the reflection direction of light reflected from the object surface is small, and therefore, glossiness becomes high. On the other hand, in the case of surface roughness having a comparatively high frequency, the variation in the angle of light reflected from the object surface due to the fine surface roughness becomes large, and therefore, glossiness becomes low. As described above, the magnitude of the frequency component of surface roughness affects glossiness, but in Japanese Patent Laid-Open No. 2004-299058, the surface roughness-layer and the glossy layer are formed independently without taking into consideration the influence of the frequency of the surface roughness. Because of this, there is a case where it is not possible to reproduce desired glossiness in a three-dimensional molded article that is output.

SUMMARY OF THE INVENTION

The present invention in its first aspect provides an image processing apparatus as specified in claims 1 to 8. The present invention in its second aspect provides an image forming apparatus as specified in claim 9. The present invention in its third aspect provides an image processing method as specified in claim 10. The present invention in its fourth aspect provides a program as specified in claim 11.

Further features of the present invention will become apparent from the following description of exemplary embodiments (with reference to the attached drawings).

BRIEF DESCRIPTION OF THE DRAWINGS

FIG. 1 is a graph representing a relationship between the surface roughness frequency and glossiness;
FIGs. 2A and 2B are diagrams each explaining the way the specular glossiness of an object is measured;
FIG. 3 is a diagram showing a configuration example of an image forming system;
FIG. 4 is a block diagram showing a function configuration of an image processing apparatus;
FIG. 5 is a flowchart showing a flow of processing in the image processing apparatus;
FIG. 6 is a diagram showing an example of a UI screen that is used at the time of acquisition of input data;
FIG. 7 is a flowchart showing details of glossiness correction processing according to a first embodiment;
FIG. 8 is a diagram showing an example of a roughness glossiness characteristic LUT according to the first embodiment;
FIGs. 9A and 9B are diagrams each showing a specific example of results of the glossiness correction processing in the first embodiment;
FIG. 10 is a diagram showing a configuration of an ink jet printer;
FIG. 11 is a schematic diagram showing a section of a three-dimensional molded article;
FIG. 12A is an explanatory diagram of a ratio of area and FIG. 12B is a table indicating an example of a relationship between the ratio of area and the glossiness;

FIG. 13 is a diagram explaining the effect in the case where the glossiness correction processing is performed in the first embodiment;

FIG. 14A is a graph representing a relationship between the frequency of surface roughness data and glossiness according to a second embodiment and FIG. 14B is a diagram explaining ink spreading;

FIG. 15 is a flowchart showing details of glossiness correction processing according to the second embodiment;

FIG. 16 is a diagram showing an example of a roughness glossiness characteristic LUT according to the second embodiment;

FIG. 17 is a graph representing a relationship between the frequency of surface roughness data and glossiness according to a third embodiment;

FIG. 18 is a flowchart showing details of glossiness correction processing according to the third embodiment;

FIG. 19 is a flowchart showing details of glossiness correction processing according to a fourth embodiment; and

FIG. 20 is a diagram showing an example of a UI screen for inputting the presence / absence of the influence of surface roughness in glossiness data.

DESCRIPTION OF THE EMBODIMENTS

Hereinafter, with reference to the attached drawings, the present invention is explained in detail in accordance with preferred embodiments. Configurations shown in the following embodiments are merely exemplary and the present invention is not limited to the configurations shown schematically.

[First embodiment]

In the following, a method for obtaining a three-dimensional molded article having desired glossiness, for which the frequency characteristics of surface roughness have been taken into consideration, by an image forming apparatus is explained. Here, the three-dimensional molded article may be a three-dimensional molded article that is formed by, for example, a 3D printer, or a three-dimensional molded article that is formed by forming a pigment color material a plurality of times in the same area of a printing medium by a pigment printer.

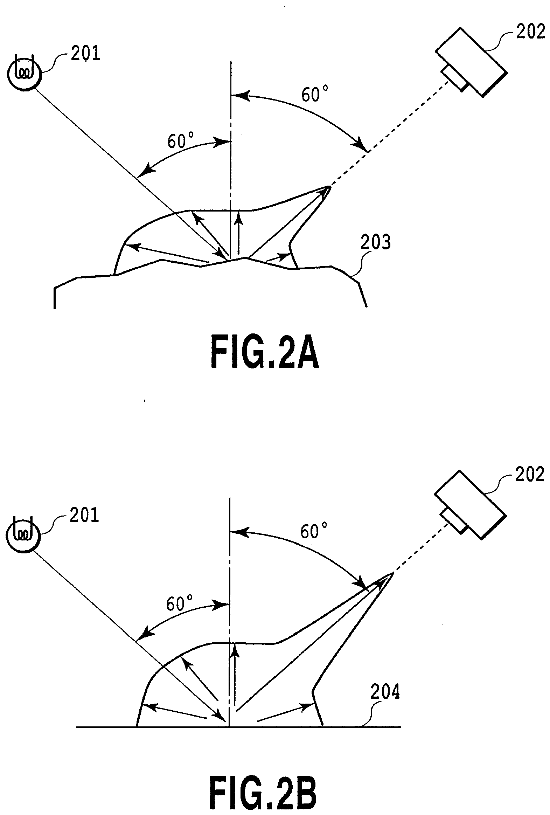

In the present embodiment, it is assumed that the specular glossiness is adopted as glossiness data. FIGs. 2A and 2B are diagrams each explaining the way the specular glossiness of an object is measured. In FIG. 2A, light from a measurement light source 201 that enters in the direction of 60° is reflected from a specimen surface 203 of the object having fine roughness and a light receiver 202 receives the reflected light in the direction of 60°. In FIG. 2B, light from the measurement light source 201 that enters similarly in the direction of 60° is reflected from a substantially smooth specimen surface 204 and the light receiver 202 receives the reflected light in the direction of 60°. The glossiness of the specimen surface 203 is small because the variation in the direction of light reflected from the fine surface roughness is large, and therefore, the amount of light emitted in the direction 60° becomes small (FIG. 2A). Because of this, the glossiness of the specimen surface 203 represents a value smaller than the glossiness that is acquired by the reflection from the smooth surface. The glossiness in the present embodiment means the glossiness at an incidence angle of 60° of an object having fine roughness on the surface as shown in FIG. 2A, and therefore, the glossiness data includes the influence of surface roughness.

<Outline configuration of image forming apparatus>

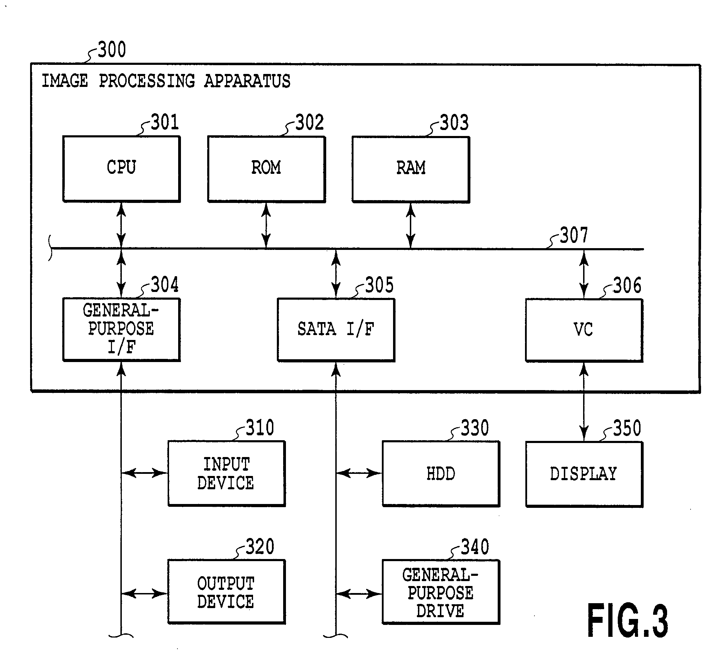

FIG. 3 is a diagram showing a configuration example of an image forming system according to the present embodiment. The image forming system includes an image processing apparatus 300, an input device 310, an output device 320, a hard disk drive (HDD) 330, a general-purpose drive 340, and a display 350. Further, the image processing apparatus 300 includes a CPU 301, a ROM 302, a RAM 303, a general-purpose interface I/F 304, a serial ATA (SATA) I/F 305, and a video card (VC) 306 and these units are connected to one another via a system bus 307.

The CPU 301 controls the entire image forming system by executing an operating system (OS) and various programs stored in the ROM 302 or the HDD 330 by using the RAM 303 as a work memory. The programs that the CPU 301 executes include programs for image processing, to be described later. The general-purpose I/F 304 is a serial bus interface, for example, such as USB, and to which the input device 310, such as a mouse and a keyboard, the output device 320, such as a printer, etc., are connected. To the SATA I/F 305, the HDD 330 and the general-purpose drive 340 that performs read and write of various storage media are connected. The CPU 301 makes use of the HDD 330 and various storage media mounted on the general-purpose drive 340 as a storage area of data to perform read and write. The VC 306 is a video interface and to which, the display 350 is connected. The CPU 301 displays a user interface (UI) screen provided by a program on the display 350 and receives user inputs including instructions from a user via the input device 310.

<Function configuration of image processing apparatus>

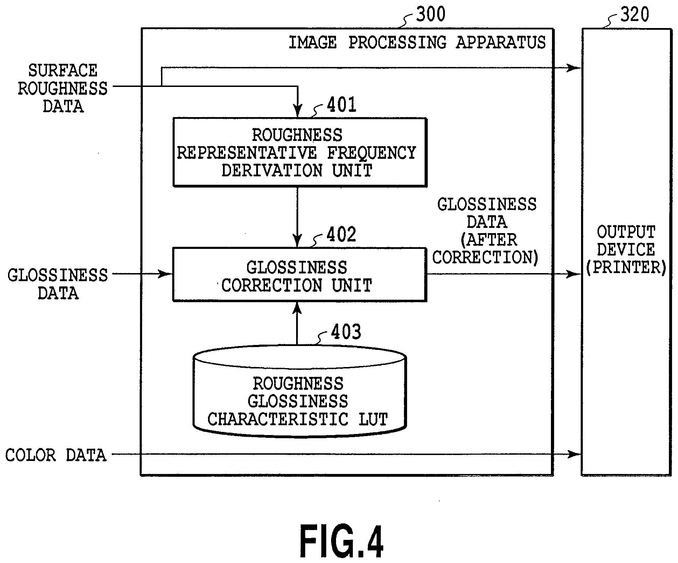

FIG. 4 is a block diagram showing a function configuration of the image processing apparatus 300 according to the present embodiment. The image processing apparatus 300 includes a roughness representative frequency derivation unit 401, a glossiness correction unit 402, and a roughness glossiness characteristic LUT 403. To the image processing apparatus 300, three kinds of image data for forming a three-dimensional molded article on a printing medium, specifically, surface roughness data, glossiness data, and color data are input. Among these pieces of data, the surface roughness data is sent to the roughness representative frequency derivation unit 401 and the output device 320. The glossiness data is sent to the glossiness correction unit 402. The color data is sent to the output device 320 as it is.

The roughness representative frequency derivation unit 401 analyzes the surface roughness data that is input and derives a representative frequency that characterizes the surface roughness (hereinafter, roughness representative frequency) in the three-dimensional molded article. Information on the derived roughness representative frequency is sent to the glossiness correction unit 402.

The glossiness correction unit 402 corrects the glossiness data based on the roughness representative frequency derived from the surface roughness data and the output characteristics of the output device 320 (printer). Here, the output characteristics of the printer mean the frequency response characteristics of the surface roughness that are output. Then, as what represents the output characteristics, a lookup table in which various roughness frequencies and glossiness are associated with each other (the roughness glossiness characteristic LUT 403) is used. The corrected glossiness data is sent to the output device 320.

Then, the printer as the output device 320 performs printing processing by using the surface roughness data, the corrected glossiness data, and the color data that are input, and outputs a three-dimensional molded article.

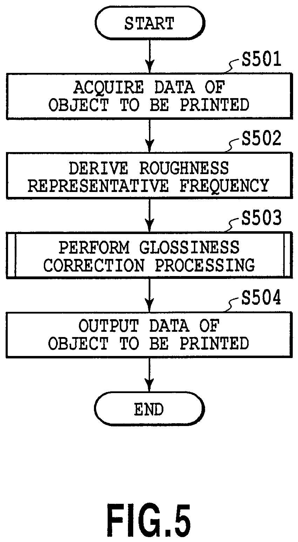

FIG. 5 is a flowchart showing a flow of processing in the image processing apparatus 300. The series of processing is implemented by the CPU 301 executing the program stored in the ROM 302 or the HDD 330 after loading the program into the RAM 303.

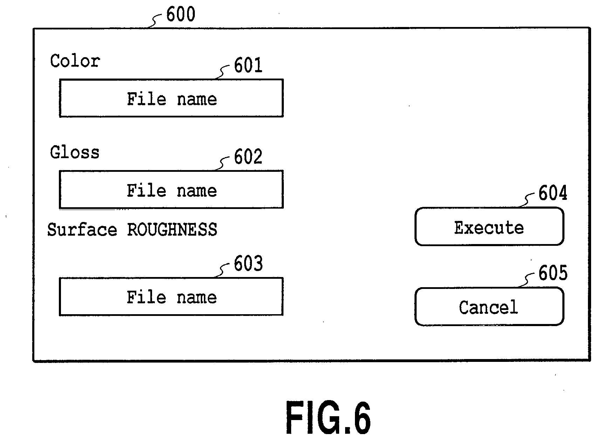

At step 501, the above-described three kinds of image data (surface roughness data, glossiness data, color data) relating to a three-dimensional molded article, which is an object to be reproduced, is acquired. The surface roughness data that is acquired here is data describing the heights with respect to the reference surface in a two-dimensional distribution. In the present embodiment, the surface roughness data is assumed to be data of a grayscale image (hereinafter, "surface roughness image") in which the height at each pixel position (height of 0 mm to 1 mm with respect to the reference surface) is converted into an 8-bit value from 0 to 255. Further, the glossiness data is data describing a two-dimensional distribution of the specular glossiness at an incidence angle of 60 degrees and an emission angle of 60 degrees, respectively, which is obtained in the measurement system in FIGs. 2A and 2B. In the present embodiment, the data of the grayscale image in which specular glossiness of 7.7 to 85.2 (measured values) at 60 degrees, which the printer as the output device 320 can output, is replaced with 8-bit values (pixel values) from 0 to 255 is represented by $G_{in}$. Further, the color data is data representing the color at each position of a three-dimensional molded article that is to be reproduced by RGB values and is found from CIELab values by the sRGB conversion formula. FIG. 6 is a diagram showing an example of a user interface (UI) screen that is used at the time of acquisition of input data. On a UI screen 600, an input area 601 is an area to which the file name of data specifying color information on an object to be printed is input. An input area 602 is an area to which the file name of data specifying gloss information on an object to be printed is input. An input area 603 is an area to which the file name of data specifying surface roughness information on an object to be printed is input. In the case where an Execute button 604 is pressed down, the above-described three kinds of data corresponding to each file name that is input to each of the input areas 601 to 603 are acquired from the HDD 330 or the general-purpose drive 340. In the case where a Cancel button 605 is pressed down, the processing ends without acquiring the data.

At step 502, the roughness representative frequency derivation unit 401 analyzes the acquired surface roughness data and derives the above-described roughness representative frequency. Specifically, by a method shown below, a representative frequency $f_{rep}$ of a surface roughness image H (x, y) is derived.

First the surface roughness image H (x, y) is resolved into frequency components by the fast Fourier transformation using expression (1) below, which is publicly known, and a frequency image A (u, v) is found.

$$A (u, v) = FFT (H (x, y)) \cdots \text{expression (1)}$$

In expression (1) described above, u and v are the horizontal frequency and the vertical frequency, respectively. It is only required to resolve the surface roughness image into frequency components, and therefore, it may also be possible to use another resolution method, such as the wavelet conversion.

Next, by using the frequency image A (u, v) obtained by the frequency resolution, the representative frequency $f_{rep}$ that characterizes the surface roughness image is derived. In the present embodiment, a pixel (u, v) the value of which is the largest in the frequency image A (u, v) is extracted and a frequency $f_{max}$ with the maximum amplitude value in the frequency space is derived as a frequency that characterizes roughness by using expression (2) below.

$$f_{max} = \arg\max_{f}\left(A(f)\right) \text{ here, } f = \sqrt{u^2 + v^2} \quad \cdots \text{ expression (2)}$$

In expression (2) described above, arg max is a function to find a variable f that maximizes a function A (f) . In the present embodiment, as described above, the frequency with the maximum amplitude value in the frequency space is taken to be the representative frequency $f_{rep}$ that characterizes the surface roughness, but the frequency is not limited to this. For example, it may also be possible to take the frequency with the minimum amplitude value in the frequency space to be the roughness representative frequency conversely as in the present embodiment, or it may also be possible to take another statistical value, such as the mean or the median in the frequency space, to be the roughness representative frequency in view of noise or the like. The roughness representative frequency $f_{rep}$ thus derived is sent to the glossiness correction unit 402.

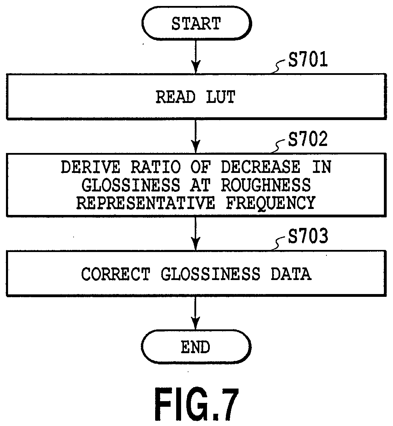

At step 503, the glossiness correction unit 402 corrects the glossiness data by using the derived roughness representative frequency $f_{rep}$. In detail, the processing to derive the amount of change in glossiness corresponding to the roughness representative frequency and to correct the glossiness data in accordance with the derived amount of change (glossiness correction processing) is performed. FIG. 7 is a flowchart showing details of the glossiness correction processing according to the present embodiment.

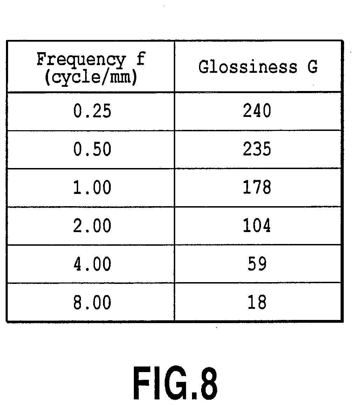

At step 701, the roughness glossiness characteristic LUT 403 (hereinafter, referred to only as "LUT") is read from the HDD 330 or the like. FIG. 8 is a diagram showing an example of the roughness glossiness characteristic LUT according to the present embodiment, and glossiness G corresponding to each frequency f of the surface roughness is specified. It is possible to obtain such an LUT by outputting the surface roughness data of a square wave shape having different frequencies and amplitudes at predetermined glossiness (e.g., G = 255) by the output device 320 (printer) and by measuring glossiness of an obtained three-dimensional image.

At step 702, a ratio of change in glossiness $\Delta G$ in the roughness representative frequency $f_{rep}$ (here, $f_{max}$) derived at step 502 described above is derived by using the read LUT. This processing can be represented as processing to estimate the amount of change (here, decrease) in glossiness $G_{max}$ (pixel value: 255) of a smooth surface depending on the frequency of roughness. It is possible to find the ratio of change (here, ratio of decrease) in glossiness $\Delta G$ by, for example, expression (3) below.

$$\Delta G = \frac{1}{G_{max}} \times \frac{\left(f_{n+1} - f_{max}\right)G_n + \left(f_{max} - f_n\right)G_{n+1}}{f_{n+1} - f_n} \quad \cdots \text{ expression (3)}$$

In expression (3) described above, $f_n$ and $f_{n+1}$ are frequencies specified in the LUT and $f_n$ is the maximum value among the frequencies lower than $f_{max}$ and $f_{n+1}$ is the minimum value among the frequencies higher than or equal to $f_{max}$. Further, $G_{max}$ is the maximum glossiness among the glossiness specified in the LUT and $G_n$ and $G_{n+1}$ are the nth and (n+1)th glossiness within the LUT, respectively, having values corresponding to the frequencies $f_n$ and $f_{n+1}$, respectively. Hereinafter, a specific procedure is explained by using numerical value examples. First, it is assumed that the roughness representative frequency $f_{max}$ is 1.5. The frequencies $f_n$ and $f_{n+1}$ in this case are $f_n = 1.0$ and $f_{n+1} = 2.0$, respectively, from the LUT shown in FIG. 8. Next, as the glossiness corresponding to the frequencies $f_n = 1.0$ and $f_{n+1} = 2.0$, $G_n = 178$ and $G_{n+1} = 104$ are acquired from the LUT shown in FIG. 8. Then, by expression (3') below, estimated glossiness $\tilde{G} = 141$ at the roughness representative frequency $f_{max} = 1.5$ is obtained.

$$\tilde{G} = \frac{\left(f_{n+1} - f_{max}\right)G_n + \left(f_{max} - f_n\right)G_{n+1}}{f_{n+1} - f_n} \quad \cdots \text{ expression (3')}$$

Finally, a ratio of the above-described estimated glossiness $\tilde{G}$ to $G_{max}$ is calculated. Here, the ratio is a ratio of the estimated glossiness $\tilde{G} = 141$ to $G_{max} = 255$, and therefore, $\Delta G = 0.55$.

In the present embodiment, the ratio of decrease in glossiness $\Delta G$ at the roughness representative frequency $f_{rep}$ is derived as a simple linear sum, but the method is not limited to this. For example, it may also be possible to use an arbitrary weighting coefficient or to derive by using a nonlinear operation, such as a gamma operation.

At step 703, by using the ratio of decreases in glossiness $\Delta G$ derived at step 702, a corrected value G' for the

input value $G_{in}$ in the glossiness data acquired at step 501 described above is found by using expression (4) below.

$$G' = G_{in} \ / \ \Delta G \cdots \text{ expression } (4)$$

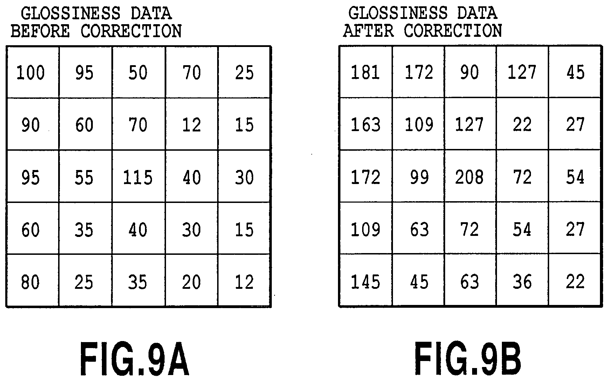

From expression (3) described above, the value of $\Delta G$ is in a range of $0 \le \Delta G \le 1$, and therefore, the glossiness correction processing here is processing to increase the input value $G_{in}$. However, in the case where $\Delta G = 0$, G' is taken to be $G_{in}$ (G' = $G_{in}$). FIGs. 9A and 9B are diagrams showing specific examples of the results of the glossiness correction processing in the present embodiment. Each input value $G_{in}$ in the glossiness data before correction shown in FIG. 9A corresponds to the value obtained by dividing the input value $G_{in}$ by the ratio of decrease in glossiness $\Delta G = 0.55$, which is found at step 702, in the glossiness data after correction shown in FIG. 9B, and therefore, the input value $G_{in}$ is increased.

Explanation is returned to the flowchart in FIG. 5. At step 504, the surface roughness data, the corrected glossiness data, and the color data are output to the printer, which is the output device 320. Then, the printing processing using these pieces of data is performed in the printer and a three-dimensional molded article having the glossiness corrected in accordance with the surface roughness is output as a result.

The above is the contents of the processing in the image processing apparatus 300 according to the present embodiment. As described above, in the present embodiment, the glossiness that takes into consideration the amount of decrease in glossiness resulting from the surface roughness is derived by deriving the ratio of decrease in glossiness for the frequency component of the surface roughness image and by multiplying the input glossiness by the inverse of the derived ratio of decrease in glossiness. Due to this, it is made possible to obtain a three-dimensional molded article that favorably reproduces the glossiness of an object having roughness on the surface.

Next, printing processing of a three-dimensional molded article in the case where an ink jet printer that uses UV curable ink is used as the output device 320 is explained.

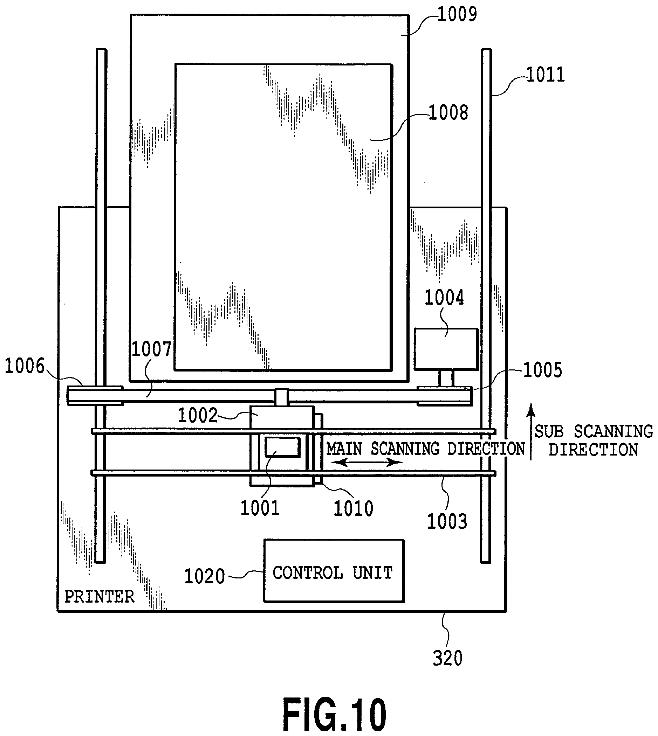

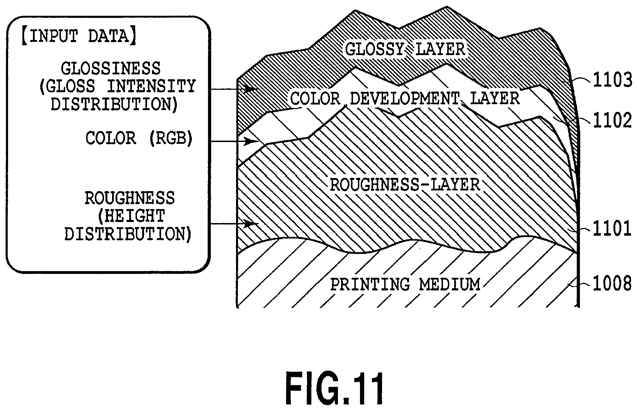

First, the printing operation in an ink jet printer is explained. FIG. 10 is a diagram showing a configuration of an ink jet printer. FIG. 11 is a schematic diagram showing a section of a three-dimensional molded article having roughness on the surface, which is formed by the ink jet printer. A head cartridge 1001 has a print head including a plurality of ejection ports and ink tanks that supply ink to the print head, and is further provided with a connector for receiving a signal or the like that drives each ejection port of the print head. Tanks for five types in total of ink are provided independently of one another, one for an ultraviolet (UV) curable colorless transparent liquid resin ink for forming a roughness-layer 1101 and a glossy layer 1103 and the others for each color ink of cyan, magenta, yellow, and black for forming a color development layer 1102. The head cartridge 1001 is mounted on a carriage 1002 in an exchangeable manner after being positioned and the carriage 1002 is provided with a connector holder for transmitting a drive signal or the like to the head cartridge 1001 via the connector. Further, on the carriage 1002, an ultraviolet light irradiation device 1010 is mounted and the ultraviolet light irradiation device 1010 is controlled so as to cure and fix an ejected curable ink onto a printing medium 1008. The carriage 1002 is designed so as to be capable of reciprocating along a guide shaft 1003. Specifically, the carriage 1002 is driven via drive mechanisms, such as a motor pulley 1005, a driven pulley 1006, and a timing belt 1007, by using a main scan motor 1004 as a drive source and at the same time, the position and movement of the carriage 1002 are controlled. The movement along the guide shaft 1003 of the carriage 1002 is referred to as a "main scan" and the direction of the movement is referred to as a "main scanning direction". The printing medium 1008 is placed on a support 1009. The head cartridge 1001 mounted on the carriage 1002 is held so that the ejection port surface protrudes downward from the carriage 1002 and becomes parallel to the printing medium 1008. A control unit 1020 includes a CPU, a storage unit, etc. , receives surface roughness data, glossiness data, and color data, and controls the operation of each part of the printer based on each piece of the data. In the present embodiment, explanation is given by using a UV curable ink jet printer as an example of the output device 320, but printer is not limited to this example provided that the printer includes the colorless transparent liquid resin ink and color materials. For example, it may also be possible to use a solid ink in place of the UV curable ink or to use an electrophotographic printer.

Subsequently, each process until a three-dimensional molded article having surface roughness including the roughness-layer 1101, the color development layer 1102, and the glossy layer 1103 is formed in the above-described printer is explained.

First, the roughness-layer 1101, which is the lowermost layer, is formed on the printing medium 1008 by using the surface roughness data. In the present embodiment, height is controlled by an ink amount. In the case where a substantially uniform layer is formed by an ink amount of 100% in forming the roughness-layer 1101, the roughness-layer 1101 has a certain thickness (height) in accordance with the volume of ejected ink. For example, in the case where the layer formed by an ink amount of 100% has a thickness of 20 $\mu$m, in order to reproduce a thickness of 100 $\mu$m, it is necessary to form a layer by an ink amount of 100% about five times. In other words, an ink amount that is ejected to the position that requires a height of 100 $\mu$m is about 500%. In accordance with the way of thinking such as this, the roughness-layer 1101 is formed first based on the density of the surface roughness image indicated by the surface roughness data.

Next, the color development layer 1102 is formed on the roughness-layer 1101 by using the color data. For example, based on a table or the like in which a relationship between each CIELab value of a pixel value, which is converted from a pixel value of an image represented by RGB values, and the density value of each color of cyan, magenta, yellow, and black is specified, each amount of ink to be ejected is determined and thus the color development layer 1102 is formed.

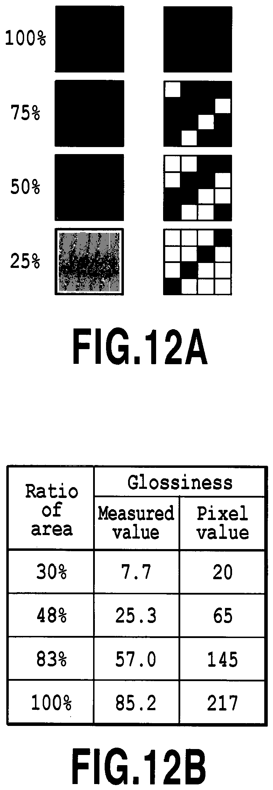

Then, the glossy layer 1103, which is the uppermost layer, is formed on the color development layer 1102 by using the corrected glossiness data. In the present embodiment, gloss is controlled by controlling the ratio of area in accordance with the state of the uppermost surface. Here, the ratio of area means a ratio of pixels to which ink is ejected in the unit area. In other words, the smoothness of the surface is controlled by controlling on / off of a dot and for example, in the case of a ratio of area of 100%, the on-dot is formed for all the pixels, and therefore, the surface of printed matter becomes close to a smooth surface. Then, as the ratio of area decreases, more roughness occur between the position where the on-dot is formed and the position where the on-dot is not formed, and therefore, the surface of printer mater becomes less smooth. In the present embodiment, it is assumed that the printer as the output device 320 is a binary printer that controls on / off of ink for each pixel and the state where all the pixels are the on-dots in the unit area is handled as an ink amount of 100%. In this case, only 100% or 0% can be represented by a single pixel, and therefore, a halftone is represented by a set of a plurality of pixels . FIG. 12A is an explanatory diagram of the ratio of area and for example, instead of representing a halftone by a density of 25%, representation of 4/16 = 25% is implemented in terms of area by ejecting ink to four pixels of 4 × 4 pixels (16 pixels in total). This is also true with each tone level of 50%, 75%, and 100%. Then, by changing the ratio of area, the roughness / fineness of a dot pattern that is formed on the uppermost surface changes. FIG. 12B is a table indicating an example of a relationship between the ratio of area and the glossiness and the glossiness corresponding to the case where the ratio of area is changed between 30% to 100% is indicated, respectively. As the ratio of area becomes small, the dot pattern that is formed on the uppermost surface becomes rough (the number of on-dots per unit area becomes small) and as the ratio of area becomes large, the dot pattern that is formed on the uppermost surface becomes fine (the number of on-dots per unit area becomes large) . For example, the pixel value in the bottom-left corner in the glossiness data after correction shown in FIG. 9B is 145 and this means that dots are formed with a ratio of area of 83% in this case.

In summary of the above, in the case where a dot pattern with a small ratio of area is formed, irregular surface roughness are formed on a printing medium and this corresponds to making the surface rough. As a result of this, it is possible to reproduce low gloss intensity. Further, in the case where a dot pattern with a high ratio of area is formed, the surface roughness that are formed on a printing medium become fine and this corresponds to making the surface smoother. As a result of this, it is possible to reproduce high gloss intensity.

In the case where the ratio of area becomes smaller than a fixed value, there is a possibility that the surface roughness on a printing medium are exposed, and therefore, glossiness becomes higher on the contrary. Because of this, it is desirable to control gloss in a range where the ratio of area is higher than a fixed value. This is the reason that the minimum value of the ratio of area is set to 30% in the table shown in FIG. 12B described previously. However, the fixed value changes depending on the characteristics of ink.

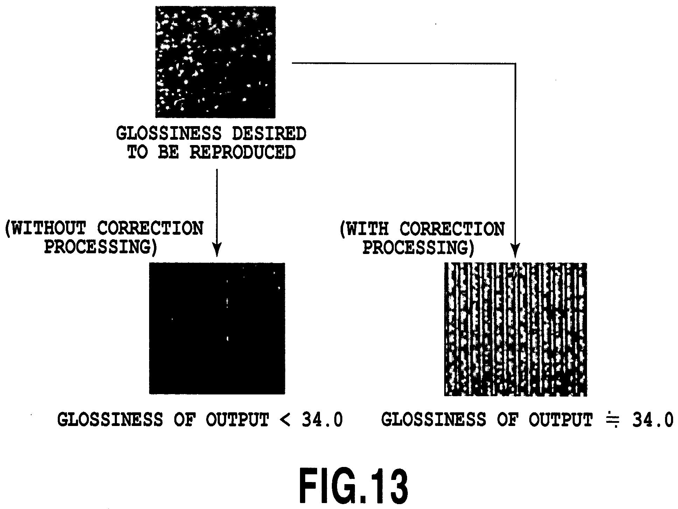

FIG. 13 is a diagram explaining the effect in the case where the glossiness correction processing in the present embodiment is performed. Here, a case is supposed where a glossy layer whose value (measured value) of glossiness that is desired to be produced is 34.0 is formed on surface roughness having a frequency of 6.0 cycle/mm. In the case where the glossiness correction processing is performed, glossiness equal to the glossiness that is desired to be reproduced is obtained. In contrast to this, in the case where the glossiness correction processing is not performed, it is known that only glossiness lower than that is obtained.

In the present embodiment, the case is explained where the correction of glossiness is performed uniformly for the surface roughness image. However, it is not necessary to uniformly perform the correction processing of glossiness for the surface roughness image. For example, it is also possible to partially correct glossiness by dividing the surface roughness image into a plurality of areas and by applying the present embodiment for each divided image.

As above, according to the present embodiment, in the case of forming a three-dimensional molded article having roughness on the surface, it is possible to reproduce desired gloss by correcting glossiness data in accordance with the amount of change in gloss that decreases as the surface roughness frequency increases.

[Second embodiment]

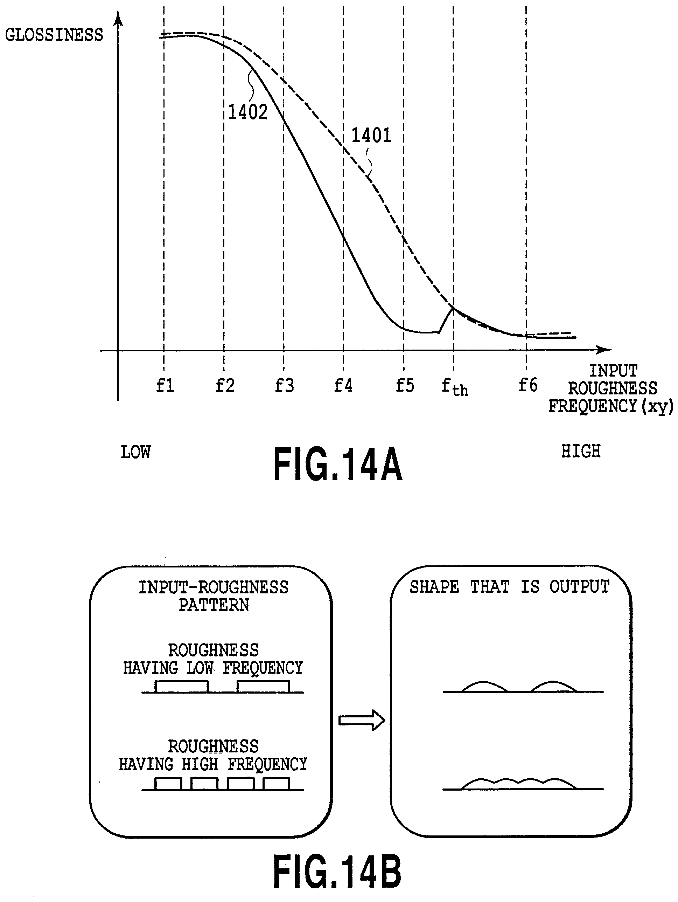

In the first embodiment, in view of that the input glossiness data includes the influence of surface roughness, the glossiness data is corrected based on the relationship between the frequency component of the surface roughness and the glossiness by taking into consideration the amount of change in gloss that decreases as the surface roughness frequency increases. However, in the case where a three-dimensional molded article having a high-frequency surface roughness shape is formed by using an ink jet printer, there is a possibility that desired glossiness is not obtained by the glossiness correction processing of the first embodiment. FIG. 14A is a graph representing a relationship between the frequency of surface roughness data and the glossiness that are input to the output device 320. A broken line 1401 corresponds to the solid line in FIG. 1 described previously and indicates that there is a tendency for the glossiness that is obtained to decrease as the frequency of the surface roughness increases. On the other hand, a solid line 1402 indicates glossiness that is measured in the case where surface roughness having different frequencies are formed by using an ink jet printer and on the roughness surface that is thus formed, gloss is reproduced with a ratio of corresponding to the glossiness indicated by the broken line 1401. It is known that, in the frequency area in which the frequency is lower than $f_{th}$, roughness is considered twice, and therefore, the glossiness becomes lower than that indicated by the broken line 1401 and that, in the frequency area in which the frequency is higher than $f_{th}$, the roughness that are intended are not formed, and therefore, the glossiness substantially the same as that indicated by the broken line 1401 is obtained. Here, the causes of the characteristics as indicated by the solid line 1402 are explained in detail in the case of an ink jet printer.

The first cause is that, with an ink jet printer, even in the case where an attempt is made to form high-frequency surface roughness, the surface becomes a substantially smooth surface due to ink spreading. FIG. 14B is a diagram explaining ink spreading and shows that the surface roughness having an intended frequency are not obtained.

The second cause is that the glossiness data that is input includes the influence of roughness (the glossiness data is data obtained by measuring glossiness of an actually reproduced object). It is premised that the roughness-layer is formed based on the surface roughness data and on the roughness-layer, the glossy layer is formed based on the glossiness data, and therefore, in the case where the glossiness data including the influence of roughness, which is input to the printer, is output as it is, rougness is considered twice as a result.

Because of the above-described reasons, the measures such as below are required in the case where an ink jet printer is used.

First, for the portion where the roughness frequency is lower than $f_{th}$ (the portion where rougness is considered twice), it is necessary to correct glossiness in accordance with the ratio of change (ratio of decrease) in glossiness corresponding to the frequency as in the first embodiment. On the other hand, for the portion where the roughness frequency is higher than or equal to $f_{th}$, because the surface becomes a substantially smooth surface due to ink spreading, the desired glossiness is obtained (the broken line 1401 and the solid line 1402 coincide with each other) only by outputting the input glossiness data as it is, and therefore, it is not necessary to correct the glossiness data. In the case where the glossiness data is corrected in the frequency area in which the frequency is higher than or equal to $f_{th}$, the correction will be over-correction, and therefore, the desired glossiness is not obtained on the contrary.

Consequently, in the present embodiment, whether or not to apply glossiness correction processing is determined in accordance with the predetermined roughness frequency $f_{th}$ at which the output characteristics change.

Explanation of the portions in common to those of the first embodiment is omitted or simplified and in the following, different points are explained mainly.

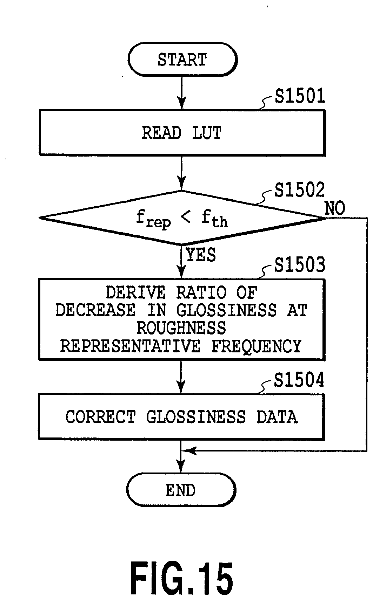

FIG. 15 is a flowchart showing details of the glossiness correction processing according to the present embodiment.

At step 1501, the roughness glossiness characteristic LUT 403 is read from the HDD 330 or the like.

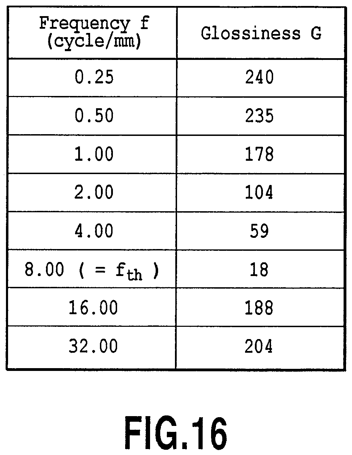

FIG. 16 is a diagram showing an example of the roughness glossiness characteristic LUT according to the present embodiment and the glossiness G corresponding to each frequency f of surface roughness is specified. As in the first embodiment, it is possible to obtain the LUT by outputting the surface roughness data of a square wave shape having different frequencies and amplitudes at predetermined glossiness (e.g., G = 255) by the output device 320 (printer) and by measuring glossiness of an obtained three-dimensional image. In the case of the present embodiment, in the frequency area in which the frequency is higher than or equal to the predetermined frequency $f_{th}$, the surface roughness having an aimed frequency are not formed due to ink spreading and the surface becomes close to a smooth surface. Consequently, in the present embodiment, it is necessary to derive a frequency $f_n$ (= $f_{th}$) corresponding to an inflection point from the obtained LUT by using expression (5) below and to determine in advance the predetermined frequency $f_{th}$ that serves as a reference.

$$G\ (f_{n-1}) > G\ (f_n)\ \text{and}\ G\ (f_n) < G\ (f_{n+1})\ \cdots\ \text{expression (5)}$$

(here, $f_{n-1} < f_n < f_{n+1}$)

In the present embodiment, an inflection point that satisfies expression (5) described above is taken to the predetermined frequency $f_{th}$ that serves as a reference, but predetermined frequency $f_{th}$ is not limited to the inflection point. For example, it may also be possible to derive a ratio of change in glossiness from the obtained LUT and to determine the predetermined frequency $f_{th}$ that serves as a reference from a relationship in magnitude between threshold values. As shown in FIG. 16, the LUT that is used in the present embodiment is the LUT that includes information on the frequency $f_{th}$ that serves as a reference.

At step 1502, the roughness representative frequency $f_{rep}$ (here, the frequency $f_{max}$ with the maximum amplitude value) derived at step 502 in the flow in FIG. 5 and the frequency $f_{th}$ that serves as a reference, which is included in the LUT read at step 1501, are compared. Then, whether the roughness representative frequency $f_{max}$ is lower than the frequency $f_{th}$ that serves as a reference is determined. In the case where the results of the determination indicate that the roughness representative frequency $f_{max}$ is lower than the frequency $f_{th}$ that serves as a reference, the processing proceeds to step 1503 and then the glossiness data is corrected. On the other hand, in the case where the roughness representative frequency $f_{max}$ is higher than or equal to the frequency $f_{th}$ that serves as a reference, the input glossiness data is used as it is and the present processing is terminated.

At step 1503, by using the LUT read at step 1501, the ratio of decrease in glossiness $\Delta G$ at the roughness representative frequency $f_{max}$ is derived (corresponding to step 702 in the flow in FIG. 7).

At step 1504, by using the ratio of decrease in glossiness $\Delta G$ derived at step 1503, the corrected value G' for the input value $G_{in}$ in the glossiness data is found (corresponding to step 703 in the flow in FIG. 7).

The above is the contents of the glossiness correction processing according to the present embodiment.

In the present embodiment, explanation is given on the assumption that the surface roughness having a frequency component lower than the frequency $f_{th}$ that serves as a reference can be formed by a printer. However, there is a case where the surface roughness shape having a desired frequency is not necessarily obtained due to the ink spreading described previously even in the case where that frequency is lower than the frequency $f_{th}$ that serves as a reference. In the case such as this, it may also be possible to perform preprocessing, such as MTF correction processing, on the surface roughness data having a frequency component lower than $f_{th}$.

As above, according to the present embodiment, in the case where the frequency band of surface roughness is the frequency band that is difficult to form by an ink jet printer, the correction of glossiness is not performed in view of that the surface roughness shape becomes substantially smooth. Due to this, it is made possible to reproduce the desired glossiness that takes ink spreading also into consideration.

[Third embodiment]

The first and second embodiments premise that the glossiness data that is input includes the influence of surface roughness. However, in the case where the object from which the input glossiness data is acquired has the same material as that used in the object to be reproduced and the surface includes a substantially smooth material, it can be thought that the influence of surface roughness is as small as ignorable. It can be thought that the case such as this includes, for example, a case where the object to be reproduced is a finished metal (e.g., satin finished metal), such as a frame of a camera, and the object from which the input glossiness data is acquired is not an actually finished metal, but a smooth coated metal plate before being finished, which is the material of the metal before being finished. This means that the measured values of the glossiness of a substantially smooth material as shown in FIG. 2B described previously are used as the input glossiness data. Next, an aspect is explained as a third embodiment in which data not including the influence of surface roughness is used as the input glossiness data.

Explanation of the portions in common to those of the first and second embodiments is omitted or simplified and in the following, different points are explained mainly.

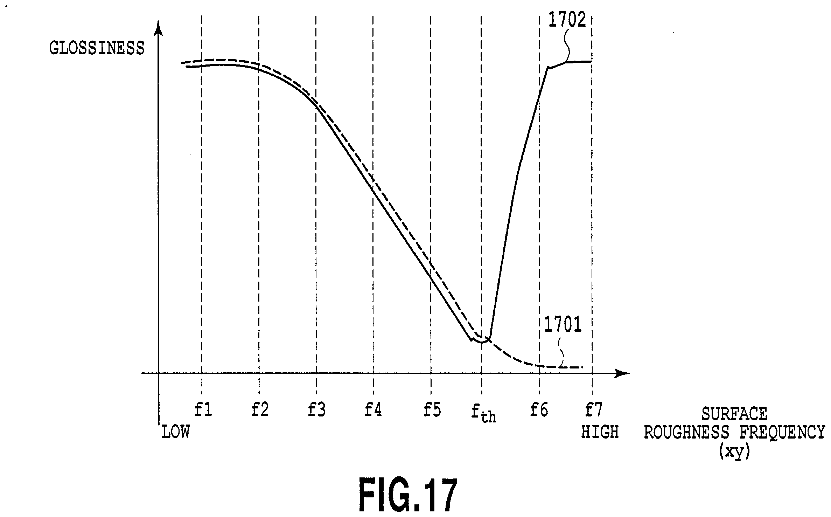

FIG. 17 is a graph representing a relationship between the frequency of surface roughness data and the glossiness that are input to the output device 320. A broken line 1701 corresponds to the solid line in FIG. 1 described previously and indicates a tendency for the obtained glossiness to decrease as the frequency of surface roughness increases. On the other hand, a solid line 1702 indicates the glossiness that is obtained in the case where glossiness data acquired from a substantially smooth material is used. In the frequency area in which the frequency is lower than or equal to the predetermined $f_{th}$, the characteristics are such that the glossiness decreases as the frequency of the surface roughness increases substantially like the broken line 1701 and in this case, it is possible to obtain desired glossiness by using the input glossiness data as it is. However, in the frequency area in which the frequency is higher than the predetermined frequency $f_{th}$, the resolution of which is difficult for an ink jet printer, as in the second embodiment, the shape of the surface roughness becomes a substantially flat surface due to ink spreading and in addition to this, the input glossiness data is obtained from a smooth material, and therefore, the glossiness becomes extremely higher than the broken line 1701, and therefore, desired glossiness is no longer obtained. As described above, in the frequency band higher than the predetermined frequency $f_{th}$, a glossy layer based on the glossiness data not including the influence of surface roughness, which is obtained from a smooth material, is formed on a substantially smooth surface, and therefore, the glossiness deviates considerably from the desired glossiness.

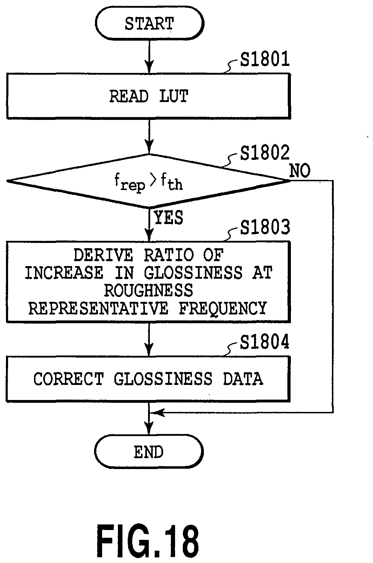

FIG. 18 is a flowchart showing details of the glossiness correction processing according to the present embodiment.

At step 1801, the roughness glossiness characteristic LUT 403 is read from the HDD 330 or the like. The LUT that is read here is the LUT (see FIG. 16) having information on the frequency $f_{th}$ that serves as a reference as in the second embodiment.

At step 1802, the roughness representative frequency $f_{rep}$ derived at step 502 in the flow in FIG. 5 and the frequency $f_{th}$ that serves as a reference, which is included in the LUT read at step 1801, are compared. Then, whether the roughness representative frequency $f_{rep}$ is higher than the frequency $f_{th}$ that serves as a reference is determined. In the case where the results of the determination indicate that the roughness representative frequency $f_{rep}$ is higher than the frequency $f_{th}$ that serves as a reference, the processing proceeds to step 1803 and then the glossiness is corrected. On the other hand, in the case where the roughness representative frequency $f_{rep}$ is lower than or equal to the frequency $f_{th}$ that serves as a reference, the input glossiness data is used as it is and the present processing is terminated.

At step 1803, by using the LUT read at step 1801, the ratio of change (here, ratio of increase) in glossiness $\Delta G$ at the roughness representative frequency $f_{rep}$ is derived (corresponding to step 702 in the flow in FIG. 7).

At step 1804, by using the ratio of increase in glossiness $\Delta G$ derived at step 1803, the corrected value G' for the input value $G_{in}$ in the glossiness data is found (corresponding to step 703 in the flow in FIG. 7). The corrected value G' at this time is found by using expression (6) below. G' = $G_{in} \times \Delta G \cdots$ expression (6)

As will be understood from expression (6) described above, the correction processing at this step is processing to decrease the input glossiness $G_{in}$ by taking into consideration the increase in glossiness due to smooth surface roughness so that the desired glossiness is obtained for the high-frequency surface roughness that are difficult for an ink jet printer to reproduce. The above is the contents of the glossiness correction processing according to the present embodiment.

In the present embodiment, explanation is given on the assumption that the glossiness correction processing is not performed on the surface roughness having a frequency component lower than the predetermined frequency $f_{th}$. However, there is a case where the surface roughness shape that is output by an ink jet printer does not necessarily become a surface roughness shape having a desired frequency due to ink spreading as described previously. Consequently, it may also be possible to perform the glossiness correction using the LUT similarly for the surface roughness having a frequency component lower than $f_{th}$, or to perform preprocessing, such as MTF correction processing.

Further, in the present embodiment, as the input glossiness data, measured values acquired from the material that is the same as that of the object to be reproduced and the surface of which is substantially smooth, but the input glossiness data does not necessarily need to be measured value. For example, the input glossiness data may be glossiness that is estimated from a model of the bidirectional reflectance distribution function, such as the phong model.

As described above, according to the present embodiment, in the case where the frequency of surface roughness is the frequency band that is difficult for a printer to form, the correction of the glossiness data is performed based on the ratio of change in glossiness that increases due to smooth surface roughness. Due to this it is made possible to appropriately reproduce desired glossiness.

[Fourth embodiment]

In the first and second embodiments, the glossiness data including the influence of surface roughness is taken to be data to be input, and in the third embodiment, the glossiness data in which the influence of surface roughness can be ignored is taken to be data to be input, respectively. However, a case may also be supposed where whether the input glossiness data includes the influence of surface roughness is not made clear in advance. Consequently, an aspect is explained as a fourth embodiment, in which whether the input glossiness includes the influence of surface roughness is determined and the contents of correction are switched in accordance with the determination results.

Explanation of the portions in common to those of the first to third embodiments is omitted or simplified and in the following, different points are explained mainly.

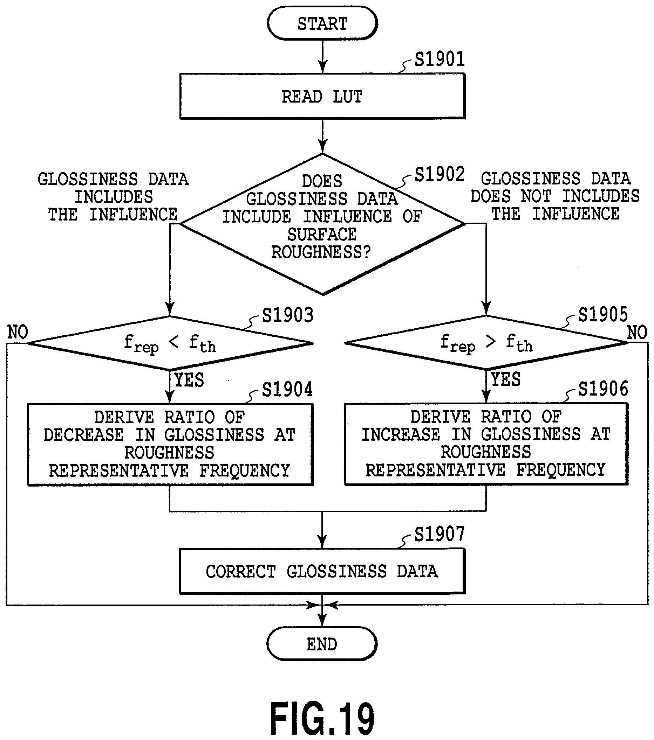

FIG. 19 is a flowchart showing details of the glossiness correction processing according to the present embodiment.

At step 1901, the roughness glossiness characteristic LUT 403 is read from the HDD 330 or the like. The LUT that is read here is the LUT (see FIG. 16) having information on the frequency $f_{th}$ that serves as a reference as in the second and third embodiments.

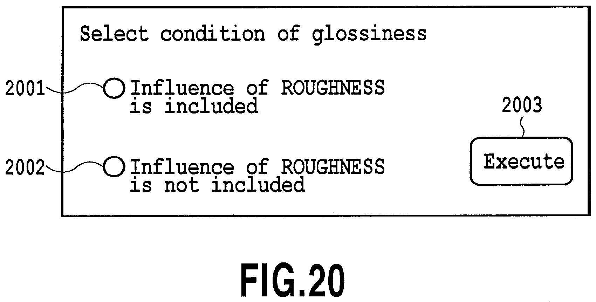

At step 1902, whether the input glossiness data is data including the influence of surface roughness is determined. This determination is performed based on, for example, a user input via the UI screen that is displayed on the display 350. FIG. 20 is a diagram showing an example of the UI screen for inputting the presence / absence of the influence of surface roughness in the glossiness data. A user actually produces an output by a printer and visually determines whether desired gloss is obtained in the printed matter, and determines that the glossiness data includes the influence of surface roughness in the case where desired gloss is not reproduced. In the case of determining that the glossiness data includes the influence of surface roughness as described above, the user checks a radio button 2001 and then presses down an Execute button 2003. On the other hand, in the case of determining that the glossiness data does not include the influence of surface roughness, the user checks a radio button 2002 and then presses down the Execute button 2003. For example, in the case where it is made clear empirically that desired glossiness is not obtained in a specific frequency band, besides the determination based on the user input, it may also be possible to automatically perform determination by holding the frequency as a threshold value. In the case where it is determined that the glossiness data includes the influence of surface roughness, the processing proceeds to step 1903. On the other hand, in the case where it is determined that the glossiness data does not include the influence of surface roughness, the processing proceeds to step 1905.

At step 1903, as at step 1502 in FIG. 15 according to the second embodiment, the roughness representative frequency $f_{rep}$ derived at step 502 in the flow in FIG. 5 and the frequency $f_{th}$ that serves as a reference in the LUT read at step 1901 are compared. Then, whether the roughness representative frequency $f_{rep}$ is lower than the frequency $f_{th}$ that serves as a reference is determined. In the case where the results of the determination indicate that the roughness representative frequency $f_{rep}$ is lower than the frequency $f_{th}$ that serves as a reference, the processing proceeds to step 1904 and then the glossiness is corrected. On the other hand, in the case where the roughness representative frequency $f_{rep}$ is higher than or equal to the frequency $f_{th}$ that serves as a reference, the input glossiness data is used as it is and the present processing is terminated.

At step 1904, as at step 1503 in FIG. 15 according to the second embodiment, by using the LUT read at step 1901, the ratio of decrease in glossiness $\Delta G$ at the roughness representative frequency $f_{rep}$ is derived. Then, the processing proceeds to step 1907.

At step 1905, as at step 1802 in FIG. 18 according to the third embodiment, the roughness representative frequency $f_{rep}$ derived at step 502 in the flow in FIG. 5 and the frequency $f_{th}$ that serves as a reference in the LUT read at step 1901 are compared. Then, whether the roughness representative frequency $f_{rep}$ is higher than the frequency $f_{th}$ that serves as a reference is determined. In the case where the results of the determination indicate that the roughness representative frequency $f_{rep}$ is higher than the frequency $f_{th}$ that serves as a reference, the processing proceeds to step 1906 and then the glossiness is corrected. On the other hand, in the case where the roughness representative frequency $f_{rep}$ is lower than or equal to the frequency $f_{th}$ that serves as a reference, the input glossiness data is used as it is and the present processing is terminated.

At step 1906, as at step 1803 in FIG. 18 according to the third embodiment, by using the LUT read at step 1901, the ratio of increase in glossiness $\Delta G$ at the roughness representative frequency $f_{rep}$ is derived. Then, the processing proceeds to step 1907.

At step 1907, by using the radio of decrease in glossiness $\Delta G$ derived at step 1904 or the ratio of increase in glossiness $\Delta G$ derived at step 1906, the corrected value G' for the input value $G_{in}$ in the glossiness data is found. In other words, in the case where the roughness representative frequency $f_{rep}$ is lower than the frequency $f_{th}$ that serves as a reference, the correction processing to increase the input value $G_{in}$ is performed by using the ratio of decrease in glossiness $\Delta G$ and expression (4) described previously. Then, in the case where the roughness representative frequency $f_{rep}$ is higher than the frequency $f_{th}$ that serves as a reference, the correction processing to decreases the input value $G_{in}$ is performed by using the ratio of increases in glossiness $\Delta G$ and expression (6) described previously.

As above, according to the present embodiment, by switching the contents of the correction processing in accordance with whether the input glossiness data includes the influence of surface roughness, it is made possible to favorably reproduce desired glossiness.

[Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the present invention, it is possible to obtain a three-dimensional molded article having desired glossiness.

**Claims**

1. An image processing apparatus (300) comprising:

an acquisition unit (301) configured to acquire (S501) surface roughness data for forming a roughness-layer (1101) and glossiness data for forming a glossy layer (1103) that can be output (S504) to an image forming apparatus (320) to form a three-dimensional molded article including at least the roughness-layer that forms roughness and the glossy layer that reproduces gloss;
wherein the surface roughness data represents a surface roughness image and the glossiness data represents a glossiness desired to be produced on surface roughness,
**characterized by** further comprising:

a derivation unit (401) configured to derive (S502) a representative frequency that characterizes roughness of the roughness-layer from the acquired surface roughness data by resolving the surface roughness image represented by the surface roughness data into frequency components and deriving there from a frequency that characterizes the surface roughness image; and
a correction unit (402) configured to correct (S503) the glossiness data before output by deriving (S702) a ratio of change in glossiness at the representative frequency from surface roughness frequency response characteristics of glossiness output by the image forming apparatus, and by correcting (S703) the glossiness data in accordance with the derived ratio of change.

2. The image processing apparatus according to claim 1, further comprising a storage unit (403) configured to store a LUT indicating the frequency response characteristics of glossiness, wherein
the correction unit finds the ratio of change in glossiness at the representative frequency by using the LUT and corrects the glossiness data by using the ratio of change.

3. The image processing apparatus according to claim 2, wherein

the glossiness data is data including the influence of surface roughness,
the LUT includes information on a predetermined frequency at which the frequency response characteristics of glossiness that are output by the image forming apparatus change, and
the correction unit performs correction to increase the value of the glossiness data in accordance with the ratio of change in a case where the representative frequency is lower than the predetermined frequency.

4. The image processing apparatus according to claim 2, wherein

the glossiness data is data not including the influence of surface roughness,
the LUT includes information on a predetermined frequency at which the frequency response characteristics of glossiness that are output by the image forming apparatus change, and
the correction unit performs correction to decrease the value of the glossiness data in accordance with the ratio of change in a case where the representative frequency is higher than the predetermined frequency.

5. The image processing apparatus according to claim 2, further comprising a determination unit configured to determine whether the glossiness data acquired by the acquisition unit is data including the influence of surface roughness, wherein
the LUT includes information on a predetermined frequency at which the frequency response characteristics of glossiness that are output by the image forming apparatus change, and the correction unit:

in a case where the results of the determination indicate that the glossiness data is data including the influence of surface roughness, performs correction to increase the value of the glossiness data in accordance with the ratio of change if the representative frequency is lower than the predetermined frequency; and
in a case where the results of the determination indicate that the glossiness data is data not including the influence of surface roughness, performs correction to decrease the value of the glossiness data in accordance with the ratio of change if the representative frequency is higher than the predetermined frequency.

6. The image processing apparatus according to claim 5, further comprising a user interface for inputting the presence / absence of the influence of surface roughness in the glossiness data, wherein
the determination unit performs the determination based on a user input via the user interface.

**7.** The image processing apparatus according to any of claims 3 to 6, wherein

the image forming apparatus is an ink jet image forming apparatus, and

the predetermined frequency is a frequency at which it is no longer possible to form surface roughness having a frequency component corresponding to the surface roughness data due to ink spreading ejected for forming the roughness-layer.

**8.** The image processing apparatus according to any of claims 1 to 7, wherein

the representative frequency is one of a frequency with the maximum amplitude value, a frequency with the minimum amplitude value, a frequency of an average value, and a frequency of a median in a frequency space.

**9.** An image forming apparatus comprising:

an acquisition unit (301) configured to acquire (S501) surface roughness data for forming a roughness-layer (1101) and glossiness data for forming a glossy layer (1103) that are used to form a three-dimensional molded article including at least the roughness-layer that forms roughness and the glossy layer that reproduces gloss; and

a unit configured to output (S504) the three-dimensional molded article by forming the roughness-layer and the glossy layer on a printing medium based on the surface roughness data and the glossiness data,

wherein the surface roughness data represents a surface roughness image and the glossiness data represents a glossiness desired to be produced on surface roughness,

**characterized by** further comprising:

a derivation unit (401) configured to derive (S502) a representative frequency that characterizes roughness of the roughness-layer from the acquired surface roughness data by resolving the surface roughness image represented by the surface roughness data into frequency components and deriving there from a frequency that characterizes the surface roughness image; and

a correction unit (402) configured to correct (S503) the glossiness data before output by deriving (S702) a ratio of change in glossiness at the representative frequency from surface roughness frequency response characteristics of glossiness output by the image forming apparatus, and by correcting (S703) the glossiness data in accordance with the derived ratio of change.

**10.** An image processing method of image data that is used to form a three-dimensional molded article, the method comprising the steps of:

acquiring (S501) surface roughness data for forming a roughness layer (1101) and glossiness data for forming a glossy layer (1103) that can be output (S504) to an image forming apparatus (320) to form a three-dimensional molded article including at least the roughness-layer that forms roughness and the glossy layer that reproduces gloss;

wherein the surface roughness data represents a surface roughness image and the glossiness data represents a glossiness desired to be produced on surface roughness,

**characterized by** further comprising steps of:

deriving (S502) a representative frequency that characterizes roughness of the roughness layer from the acquired surface roughness data by resolving the surface roughness image represented by the surface roughness data into frequency components and deriving there from a frequency that characterizes the surface roughness image; and

correcting (S503) the glossiness data before output by deriving (S702) a ratio of change in glossiness at the representative frequency from surface roughness frequency response characteristics of glossiness output by the image forming apparatus, and by correcting (S703) the glossiness data in accordance with the derived ratio of change.

**11.** A program for causing a computer to perform the image processing method according to claim 10.

**Patentansprüche**

1. Bildverarbeitungsvorrichtung (300) umfassend

   eine Erfassungseinheit (301), die konfiguriert ist zum Erfassen (S501) von Oberflächenrauheitsdaten zum Bilden einer Rauheitsschicht (1101) und von Glanzdaten zum Bilden einer Glanzschicht (1103), die an eine Bilderzeugungsvorrichtung (320) ausgegeben werden können, um einen dreidimensionalen Formgegenstand zu bilden, der zumindest die Rauheitsschicht, die Rauheit bildet, und die Glanzschicht, die Glanz reproduziert, enthält;
   wobei die Oberflächenrauheitsdaten ein Oberflächenrauheitsbild darstellen und die Glanzdaten Glanz, der auf Oberflächenrauheit gebildet werden soll, darstellen,
   **dadurch gekennzeichnet, dass** die Vorrichtung weiterhin umfasst;
   eine Ableitungseinheit (401), die konfiguriert ist zum Ableiten (S502) einer repräsentativen Frequenz, die Rauheit der Rauheitsschicht von den erfassten Oberflächenrauheitsdaten durch Auflösen des durch die Oberflächenrauheitsdaten dargestellten Oberflächenrauheitsbilds in Frequenzkomponenten kennzeichnet und daraus Ableiten von einer Frequenz, die das Oberflächenrauheitsbild kennzeichnet; und
   eine Korrektureinheit, die konfiguriert ist zum Korrigieren (S503) der Glanzdaten vor Ausgabe durch Ableiten (S702) eines Glanzänderungsverhältnisses bei der repräsentativen Frequenz aus von der Bilderzeugungsvorrichtung ausgegebenen Oberflächenrauheits-Frequenzantworteigenschaften von Glanz und durch Korrektur (S703) der Glanzdaten gemäß dem abgeleiteten Änderungsverhältnis.

2. Bildverarbeitungsvorrichtung nach Anspruch 1, weiterhin umfassend eine Speichereinheit (403), die konfiguriert ist zum Speichern einer LUT, die die Frequenzantworteigenschaften von Glanz angibt, wobei
   die Korrektureinheit das Glanzänderungsverhältnis bei der repräsentativen Frequenz unter Verwendung der LUT ermittelt und die Glanzdaten unter Verwendung des Änderungsverhältnisses korrigiert.

3. Bildverarbeitungsvorrichtung nach Anspruch 2, wobei

   die Glanzdaten Daten sind, die den Einfluss von Oberflächenrauheit enthalten,
   die LUT Information über eine vorbestimmte Frequenz enthält, bei der sich die Frequenzantworteigenschaften von Glanz, die von der Bilderzeugungsvorrichtung ausgegeben werden, ändern, und
   die Korrektureinheit eine Korrektur durchführt, um den Wert der Glanzdaten gemäß dem Änderungsverhältnis in einem Fall zu erhöhen, in dem die repräsentative Frequenz niedriger als die vorbestimmte Frequenz ist.

4. Bildverarbeitungsvorrichtung nach Anspruch 2, wobei

   die Glanzdaten Daten sind, die den Einfluss von Oberflächenrauheit nicht enthalten,
   die LUT Information über eine vorbestimmte Frequenz enthält, bei der sich die Frequenzantworteigenschaften von Glanz, die von der Bilderzeugungsvorrichtung ausgegeben werden, ändern, und
   die Korrektureinheit eine Korrektur durchführt, um den Wert der Glanzdaten gemäß dem Änderungsverhältnis in einem Fall zu verringern, in dem die repräsentative Frequenz höher als die vorbestimmte Frequenz ist.

5. Bildverarbeitungsvorrichtung nach Anspruch 2, weiterhin umfassend eine Bestimmungseinheit, die konfiguriert ist zu bestimmen, ob die von der Erfassungseinheit erfassten Glanzdaten Daten sind, die den Einfluss von Oberflächenrauheit enthalten, wobei
   die LUT Information über eine vorbestimmte Frequenz enthält, bei der sich die Frequenzantworteigenschaften von Glanz, die von der Bilderzeugungsvorrichtung ausgegeben werden, ändern, und die Korrektureinheit:

   in einem Fall, in dem die Ergebnisse der Bestimmung angeben, dass die Glanzdaten Daten sind, die den Einfluss von Oberflächenrauheit enthalten, eine Korrektur durchführt, um den Wert der Glanzdaten gemäß dem Änderungsverhältnis zu erhöhen, wenn die repräsentative Frequenz niedriger als die vorbestimmte Frequenz ist; und
   in einem Fall, in dem die Ergebnisse der Bestimmung angeben, dass die Glanzdaten Daten sind, die den Einfluss von Oberflächenrauheit nicht enthalten, eine Korrektur durchführt, um den Wert der Glanzdaten gemäß dem Änderungsverhältnis zu verringern, wenn die repräsentative Frequenz höher als die vorbestimmte Frequenz ist.

6. Bildverarbeitungsvorrichtung nach Anspruch 5, weiterhin umfassend eine Benutzerschnittstelle zum Eingeben des Vorhandenseins / Nichtvorhandenseins des Einflusses von Oberflächenrauheit in den Glanzdaten, wobei die Bestimmungseinheit die Bestimmung basierend auf einer Benutzereingabe über die Benutzerschnittstelle durchführt.

7. Bildverarbeitungsvorrichtung nach einem der Ansprüche 3 bis 6, wobei

die Bilderzeugungsvorrichtung eine Tintenstrahlbilderzeugungsvorrichtung ist, und
die vorbestimmte Frequenz eine Frequenz ist, bei der es nicht mehr möglich ist, Oberflächenrauheit mit einer Frequenzkomponente entsprechend den Oberflächenrauheitsdaten aufgrund von Tintenausbreitung, die zum Bilden der Rauheitsschicht ausgestoßen wird, zu bilden.

8. Bildverarbeitungsvorrichtung nach einem der Ansprüche 1 bis 7, wobei die repräsentative Frequenz entweder eine Frequenz mit einem maximalen Amplitudenwert, eine Frequenz eines Durchschnittswerts und eine Frequenz eines Medians in einem Frequenzraum ist.

9. Bilderzeugungsvorrichtung umfassend:
eine Erfassungseinheit (301), die konfiguriert ist zum Erfassen (S501) von Oberflächenrauheitsdaten zum Bilden einer Rauheitsschicht (1101) und von Glanzdaten zum Bilden einer Glanzschicht (1103), die an eine Bilderzeugungsvorrichtung (320) ausgegeben werden können, um einen dreidimensionalen Formgegenstand zu bilden, der zumindest die Rauheitsschicht, die Rauheit bildet, und die Glanzschicht, die Glanz reproduziert, enthält; und

eine Einheit, die konfiguriert ist zum Ausgeben (S504) des dreidimensionalen Formgegenstands durch Bilden der Rauheitsschicht und der Glanzschicht auf einem Druckmedium basierend auf den Oberflächenrauheitsdaten und den Glanzdaten,
wobei die Oberflächenrauheitsdaten ein Oberflächenrauheitsbild darstellen und die Glanzdaten Glanz, der auf Oberflächenrauheit gebildet werden soll, darstellen,
**dadurch gekennzeichnet, dass** die Vorrichtung weiterhin umfasst;
eine Ableitungseinheit (401), die konfiguriert ist zum Ableiten (S502) einer repräsentativen Frequenz, die Rauheit der Rauheitsschicht von den erfassten Oberflächenrauheitsdaten durch Auflösen des durch die Oberflächenrauheitsdaten dargestellten Oberflächenrauheitsbilds in Frequenzkomponenten kennzeichnet, und daraus Ableiten von einer Frequenz, die das Oberflächenrauheitsbild kennzeichnet; und
eine Korrektureinheit, die konfiguriert ist zum Korrigieren (S503) der Glanzdaten vor Ausgabe durch Ableiten (S702) eines Glanzänderungsverhältnisses bei der repräsentativen Frequenz aus von der Bilderzeugungsvorrichtung ausgegebenen Oberflächenrauheits-Frequenzantworteigenschaften von Glanz und durch Korrektur (S703) der Glanzdaten gemäß dem abgeleiteten Änderungsverhältnis.

10. Bildverarbeitungsverfahren von Bilddaten, das verwendet wird, um einen dreidimensionalen Formgegenstand zu bilden, wobei das Verfahren folgende Schritte umfasst:

Erfassen (S501) von Oberflächenrauheitsdaten zum Bilden einer Rauheitsschicht (1101) und von Glanzdaten zum Bilden einer Glanzschicht (1103), die an eine Bilderzeugungsvorrichtung (320) ausgegeben werden können, um einen dreidimensionalen Formgegenstand zu bilden, der zumindest die Rauheitsschicht, die Rauheit bildet, und die Glanzschicht, die Glanz reproduziert, enthält;
wobei die Oberflächenrauheitsdaten ein Oberflächenrauheitsbild darstellen und die Glanzdaten Glanz, der auf Oberflächenrauheit gebildet werden soll, darstellen,
**dadurch gekennzeichnet, dass** das Verfahren weiterhin folgende Schritte umfasst;
Ableiten (S502) einer repräsentativen Frequenz, die Rauheit der Rauheitsschicht von den erfassten Oberflächenrauheitsdaten durch Auflösen des durch die Oberflächenrauheitsdaten dargestellten Oberflächenrauheitsbilds in Frequenzkomponenten kennzeichnet, und daraus Ableiten von einer Frequenz, die das Oberflächenrauheitsbild kennzeichnet; und
Korrigieren (S503) der Glanzdaten vor Ausgabe durch Ableiten (S702) eines Glanzänderungsverhältnisses bei der repräsentativen Frequenz aus von der Bilderzeugungsvorrichtung ausgegebenen Oberflächenrauheits-Frequenzantworteigenschaften von Glanz und durch Korrektur (S703) der Glanzdaten gemäß dem abgeleiteten Änderungsverhältnis.

11. Programm zum Veranlassen eines Computers, das Bildverarbeitungsverfahren nach Anspruch 10 durchzuführen.

**Revendications**

1. Appareil de traitement d'image (300) comprenant :

   une unité d'acquisition (301) configurée pour acquérir (S501) des données de rugosité de surface destinées à former une couche de rugosité (1101) et des données de brillance destinées à former une couche brillante (1103), qui peuvent être fournies en sortie (S504) à un appareil de formation d'image (320) afin de former un article moulé tridimensionnel comportant au moins la couche de rugosité qui forme la rugosité et la couche brillante qui reproduit le caractère brillant ;
   dans lequel les données de rugosité de surface représentent une image de rugosité de surface et les données de brillance représentent une brillance souhaitée devant être produite sur la rugosité de surface,
   **caractérisé en ce qu'**il comprend en outre :

   une unité d'obtention (401) configurée pour obtenir (S502) une fréquence représentative qui caractérise la rugosité de la couche de rugosité à partir des données de rugosité de surface acquises en résolvant l'image de rugosité de surface représentée par les données de rugosité de surface en composantes de fréquence et en obtenant à partir de celles-ci une fréquence qui caractérise l'image de rugosité de surface ; et
   une unité de correction (402) configurée pour corriger (S503) les données de brillance avant leur fourniture en sortie en obtenant (S702) un rapport de variation de brillance à la fréquence représentative à partir de caractéristiques de réponse en fréquence de rugosité de surface de la brillance fournies en sortie par l'appareil de formation d'image, et en corrigeant (S703) les données de brillance en fonction du rapport de variation obtenu.

2. Appareil de traitement d'image selon la revendication 1, comprenant en outre une unité de stockage (403) configurée pour stocker une LUT indiquant les caractéristiques de réponse en fréquence de la brillance, dans lequel
   l'unité de correction trouve le rapport de variation de brillance à la fréquence représentative en utilisant la LUT et corrige les données de brillance en utilisant le rapport de variation.

3. Appareil de traitement d'image selon la revendication 2, dans lequel
   les données de brillance sont des données incluant l'influence de la rugosité de surface,
   la LUT contient des informations concernant une fréquence prédéterminée à laquelle varient les caractéristiques de brillance de la réponse en fréquence qui sont fournies en sortie par l'appareil de formation d'image, et
   l'unité de correction effectue une correction pour augmenter la valeur des données de brillance en fonction du rapport de variation dans un cas où la fréquence représentative est inférieure à la fréquence prédéterminée.

4. Appareil de traitement d'image selon la revendication 2, dans lequel
   les données de brillance sont des données n'incluant pas l'influence de la rugosité de surface,
   la LUT comprend des informations concernant une fréquence prédéterminée à laquelle varient les caractéristiques de réponse en fréquence de la brillance, qui sont fournies en sortie par l'appareil de formation d'image, et
   l'unité de correction effectue une correction afin de réduire la valeur des données de brillance en fonction du rapport de variation dans un cas où la fréquence représentative est supérieure à la fréquence prédéterminée.

5. Appareil de traitement d'image selon la revendication 2, comprenant en outre une unité de détermination configurée pour déterminer si les données de brillance acquises par l'unité d'acquisition sont des données incluant l'influence de la rugosité de surface, dans lequel
   la LUT contient des informations concernant une fréquence prédéterminée à laquelle varient les caractéristiques de réponse en fréquence de la brillance, qui sont fournies en sortie par l'appareil de formation d'image, et l'unité de correction :

   dans un cas où les résultats de la détermination indiquent que les données de brillance sont des données incluant l'influence de la rugosité de surface, effectue une correction pour augmenter la valeur des données de brillance en fonction du rapport de variation si la fréquence représentative est inférieure à la fréquence prédéterminée ; et
   dans un cas où les résultats de la détermination indiquent que les données de brillance sont des données n'incluant pas l'influence de la rugosité de surface, effectue une correction pour réduire la valeur des données de brillance en fonction du rapport de variation si la fréquence représentative est supérieure à la fréquence prédéterminée.

6. Appareil de traitement d'image selon la revendication 5, comprenant en outre une interface utilisateur destinée à saisir la présence/absence de l'influence de la rugosité de surface dans les données de brillance, dans lequel l'unité de détermination effectue la détermination sur la base d'une entrée utilisateur via l'interface utilisateur.

7. Appareil de traitement d'image selon l'une quelconque des revendications 3 à 6, dans lequel
l'appareil de formation d'image est un appareil de formation d'image à jet d'encre, et
la fréquence prédéterminée est une fréquence à laquelle il n'est plus possible de former une rugosité de surface ayant une composante de fréquence correspondant aux données de rugosité de surface du fait de l'étalement de l'encre éjectée pour former la couche de rugosité.

8. Appareil de traitement d'image selon les revendications 1 à 7, dans lequel
la fréquence représentative est l'une d'une fréquence ayant la valeur d'amplitude maximale, d'une fréquence ayant la valeur d'amplitude minimale, d'une fréquence ayant une valeur moyenne et d'une fréquence d'une médiane dans un espace des fréquences.

9. Appareil de formation d'image comprenant :

une unité d'acquisition (301) configurée pour acquérir (S501) des données de rugosité de surface destinées à former une couche de rugosité (1101) et des données de brillance destinées à former une couche brillante (1103) qui sont utilisées pour former un article moulé tridimensionnel comportant au moins la couche de rugosité qui forme la rugosité et la couche brillante qui reproduit le caractère brillant ; et
une unité configurée pour fournir en sortie (S504) l'article moulé tridimensionnel en formant la couche de rugosité et la couche brillante sur un support d'impression sur la base des données de rugosité de surface et des données de brillance,
dans lequel les données de rugosité de surface représentent une image de rugosité de surface et les données de brillance représentent une brillance souhaitée devant être produite sur une rugosité de surface,
**caractérisé en ce qu'**il comprend en outre :

une unité d'obtention (401) configurée pour obtenir (S502) une fréquence représentative qui caractérise la rugosité de la couche de rugosité à partir des données de rugosité de surface acquises en résolvant l'image de rugosité de surface représentée par les données de rugosité de surface en composantes de fréquence et en obtenant à partir de celles-ci une fréquence qui caractérise l'image de rugosité de surface ; et
une unité de correction (402) configurée pour corriger (S503) les données de brillance avant leur fourniture en sortie en obtenant (S702) un rapport de variation de brillance à la fréquence représentative à partir de caractéristiques de réponse en fréquence de rugosité de surface de la brillance fournies en sortie par l'appareil de formation d'image, et en corrigeant (S703) les données de brillance en fonction du rapport de variation obtenu.

10. Procédé de traitement d'image sur des données d'image, qui est utilisé pour former un article moulé tridimensionnel, le procédé comprenant les étapes consistant à :

acquérir (S501) des données de rugosité de surface destinées à former une couche de rugosité (1101) et des données de brillance destinées à former une couche brillante (1103), qui peuvent être fournies en sortie (S504) à un appareil de formation d'image (320) afin de former un article moulé tridimensionnel comportant au moins la couche de rugosité qui forme la rugosité et la couche brillante qui reproduit le caractère brillant ;
dans lequel les données de rugosité de surface représentent une image de rugosité de surface et les données de brillance représentent une brillance souhaitée devant être produite sur la rugosité de surface,
**caractérisé en ce qu'**il comprend en outre les étapes consistant à :

obtenir (S502) une fréquence représentative qui caractérise la rugosité de la couche de rugosité à partir des données de rugosité de surface acquises en résolvant l'image de rugosité de surface représentée par les données de rugosité de surface en composantes de fréquence et en obtenant à partir de celles-ci une fréquence qui caractérise l'image de rugosité de surface ; et
corriger (S503) les données de brillance avant leur fourniture en sortie en obtenant (S702) un rapport de variation de brillance à la fréquence représentative à partir de caractéristiques de réponse en fréquence de rugosité de surface de la brillance fournies en sortie par l'appareil de formation d'image, et en corrigeant (S703) les données de brillance en fonction du rapport de variation obtenu.

**11.** Programme destiné à amener un ordinateur à mettre en oeuvre le procédé de traitement d'image selon la revendication 10.

FIG.1

**FIG.2A**

**FIG.2B**

300

IMAGE PROCESSING APPARATUS

| 301 | 302 | 303 |
|---|---|---|
| CPU | ROM | RAM |

307

| 304 | 305 | 306 |
|---|---|---|
| GENERAL-PURPOSE I/F | SATA I/F | VC |

| 310 | 330 | 350 |
|---|---|---|
| INPUT DEVICE | HDD | DISPLAY |

| 320 | 340 | |
|---|---|---|
| OUTPUT DEVICE | GENERAL-PURPOSE DRIVE | |

FIG.3

FIG.4

```
         ┌─────────────┐
         │    START    │
         └──────┬──────┘
                │           ⌐S501
                ▼
    ┌───────────────────────────┐
    │      ACQUIRE DATA OF       │
    │   OBJECT TO BE PRINTED     │
    └─────────────┬─────────────┘
                  │          ⌐S502
                  ▼
    ┌───────────────────────────┐
    │     DERIVE ROUGHNESS       │
    │ REPRESENTATIVE FREQUENCY   │
    └─────────────┬─────────────┘
                  │          ⌐S503
                  ▼
    ┌┃─────────────────────────┃┐
    │┃   PERFORM GLOSSINESS     ┃│
    │┃ CORRECTION PROCESSING    ┃│
    └┃─────────────────────────┃┘
                  │          ⌐S504
                  ▼
    ┌───────────────────────────┐
    │      OUTPUT DATA OF        │
    │   OBJECT TO BE PRINTED     │
    └─────────────┬─────────────┘
                  │
                  ▼
         ┌─────────────┐
         │     END     │
         └─────────────┘
```

# FIG.5

FIG.6

```
        ┌──────────────┐
        (    START     )
        └──────┬───────┘
               │           ╭S701
        ┌──────▼────────────────┐
        │       READ LUT        │
        └──────┬────────────────┘
               │           ╭S702
        ┌──────▼────────────────┐
        │ DERIVE RATIO OF DECREASE IN │
        │  GLOSSINESS AT ROUGHNESS    │
        │  REPRESENTATIVE FREQUENCY   │
        └──────┬────────────────┘
               │           ╭S703
        ┌──────▼────────────────┐
        │ CORRECT GLOSSINESS DATA │
        └──────┬────────────────┘
               │
        ┌──────▼───────┐
        (     END      )
        └──────────────┘
```

# FIG.7

| Frequency f (cycle/mm) | Glossiness G |
|---|---|
| 0.25 | 240 |
| 0.50 | 235 |
| 1.00 | 178 |
| 2.00 | 104 |
| 4.00 | 59 |
| 8.00 | 18 |

# FIG.8

GLOSSINESS DATA
BEFORE CORRECTION

| 100 | 95 | 50 | 70 | 25 |
|-----|-----|-----|-----|-----|
| 90 | 60 | 70 | 12 | 15 |
| 95 | 55 | 115 | 40 | 30 |
| 60 | 35 | 40 | 30 | 15 |
| 80 | 25 | 35 | 20 | 12 |

# FIG.9A

GLOSSINESS DATA
AFTER CORRECTION

| 181 | 172 | 90 | 127 | 45 |
|-----|-----|-----|-----|-----|
| 163 | 109 | 127 | 22 | 27 |
| 172 | 99 | 208 | 72 | 54 |
| 109 | 63 | 72 | 54 | 27 |
| 145 | 45 | 63 | 36 | 22 |

# FIG.9B

MAIN SCANNING DIRECTION

SUB SCANNING DIRECTION

CONTROL UNIT

PRINTER

FIG.10

[INPUT DATA]

GLOSSINESS
(GLOSS INTENSITY
DISTRIBUTION)

COLOR (RGB)

ROUGHNESS
(HEIGHT
DISTRIBUTION)

GLOSSY LAYER
1103

COLOR DEVELOPMENT LAYER
1102

ROUGHNESS-LAYER
1101

PRINTING MEDIUM
1008

# FIG.11

**FIG.12A**

| Ratio of area | Glossiness | |
|---|---|---|
| | Measured value | Pixel value |
| 30% | 7.7 | 20 |
| 48% | 25.3 | 65 |
| 83% | 57.0 | 145 |
| 100% | 85.2 | 217 |

**FIG.12B**

GLOSSINESS DESIRED
TO BE REPRODUCED

(WITHOUT CORRECTION
PROCESSING)

(WITH CORRECTION
PROCESSING)

GLOSSINESS OF OUTPUT < 34.0      GLOSSINESS OF OUTPUT $\fallingdotseq$ 34.0

# FIG.13

GLOSSINESS

1402

1401

f1  f2  f3  f4  f5  f$_{th}$  f6

INPUT
ROUGHNESS
FREQUENCY (xy)

LOW

HIGH

# FIG.14A

INPUT-ROUGHNESS
PATTERN

ROUGHNESS
HAVING LOW FREQUENCY

SHAPE THAT IS OUTPUT

ROUGHNESS
HAVING HIGH FREQUENCY

# FIG.14B

START

S1501

READ LUT

S1502

$f_{rep} < f_{th}$    NO

YES    S1503

DERIVE RATIO OF
DECREASE IN GLOSSINESS AT
ROUGHNESS
REPRESENTATIVE FREQUENCY

S1504

CORRECT GLOSSINESS DATA

END

# FIG.15

| Frequency f (cycle/mm) | Glossiness G |
|---|---|
| 0.25 | 240 |
| 0.50 | 235 |
| 1.00 | 178 |
| 2.00 | 104 |
| 4.00 | 59 |
| 8.00 ( $= f_{th}$ ) | 18 |
| 16.00 | 188 |
| 32.00 | 204 |

# FIG.16

FIG.17

EP 3 093 146 B1

START

READ LUT ⌐S1801

$f_{rep} > f_{th}$ ⌐S1802 — NO

YES ⌐S1803

DERIVE RATIO OF
INCREASE IN GLOSSINESS AT
ROUGHNESS
REPRESENTATIVE FREQUENCY

CORRECT GLOSSINESS DATA ⌐S1804

END

# FIG.18

START

S1901

READ LUT

GLOSSINESS DATA
INCLUDES
THE INFLUENCE

S1902

DOES
GLOSSINESS DATA
INCLUDE INFLUENCE OF
SURFACE
ROUGHNESS?

GLOSSINESS DATA
DOES NOT INCLUDES
THE INFLUENCE

S1903

NO

$f_{rep} < f_{th}$

YES

S1904

DERIVE RATIO OF
DECREASE IN GLOSSINESS AT
ROUGHNESS
REPRESENTATIVE FREQUENCY

S1905

$f_{rep} > f_{th}$

NO

YES

S1906

DERIVE RATIO OF
INCREASE IN GLOSSINESS AT
ROUGHNESS
REPRESENTATIVE FREQUENCY

S1907

CORRECT GLOSSINESS DATA

END

# FIG.19

Select condition of glossiness

2001 ◯ Influence of ROUGHNESS
is included

2003

2002 ◯ Influence of ROUGHNESS
is not included

Execute

# FIG.20

**EP 3 093 146 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004299058 A